# EUROPÄISCHE PATENTSCHRIFT

(11) **EP 2 481 484 B1**
(45) Veröffentlichungstag und Bekanntmachung des Hinweises auf die Patenterteilung: **16.09.2015**
(21) Anmeldenummer: 12001237.2
(22) Anmeldetag: 15.03.2007
(51) Int. Cl.: B05B 11/00, B29C 59/14, A45D 34/04, B65D 83/14, B29C 45/16, B65D 83/20

(54) **Abgabevorrichtung**
Dispensing device
Dispositif de dépôt

(30) Priorität: 15.03.2006 DE 102006012302
(43) Veröffentlichungstag der Anmeldung: 01.08.2012
(62) Teilanmeldung aus: 07723274.2
(73) Patentinhaber: Aptar Dortmund GmbH, 44319 Dortmund (DE)
(72) Erfinder: Neuhaus, Reinhard, 58675 Hemer (DE); Canfield, Reiker, Crystal Lake, IL 60014 (US); Jordan, Ralf, 44328 Dortmund (DE); Blumenstein, Bernd, 44339 Dortmund (DE)
(74) Vertreter: Von Rohr Patentanwälte Partnerschaft mbB

(56) Entgegenhaltungen:
- DE-B3- 10 308 727
- US-A1- 2006 231 519

## Beschreibung

Die vorliegende Erfindung betrifft eine Abgabevorrichtung für eine vorzugsweise kosmetische Flüssigkeit gemäß dem Oberbegriff des Anspruchs 1.

Unter dem Begriff "Abgabevorrichtung" ist bei der vorliegenden Erfindung insbesondere ein Abgabekopf zu verstehen, der vorzugsweise insbesondere an einem Behälter bzw. dessen Abgabeventil oder an einer handbetätigten Pumpe angebracht oder anbringbar ist. Insbesondere kann es ich auch um einen Druckbehälter, eine Spenderpumpe o. dgl, handeln. Die Abgabevorrichtung dient vorzugsweise der nicht-sprühenden Aus- bzw. Abgabe einer vorzugsweise kosmetischen Flüssigkeit. Jedoch kann es sich auch um eine Dosierpumpe bzw. handbetätigte Pumpe oder jede sonstige Abgabevorrichtung, wie einen Behälter, Abgabe- oder Sprühkopf, Spender oder dergleichen, insbesondere für eine kosmetische Flüssigkeit, handeln.

Unter dem Begriff "kosmetische Flüssigkeit" sind in einem engeren Sinn Kosmetika, Haarspray, Haarlack, ein Deodorant, ein Schaum, insbesondere Rasierschaum, ein Gel, ein Farbspray, ein Sonnen- oder Hautpflegemittel o. dgl. zu verstehen. Vorzugsweise werden in einem weiteren Sinn aber auch sonstige Körperpflegeprodukte, Reinigungsprodukte, o. dgl., und auch Suspensionen und Fluide, insbesondere mit Gasphasen, umfaßt. Weiter können als sonstige Flüssigkeiten, beispielsweise Luftverbesserer, und insbesondere auch technische Flüssigkeiten und Fluide, wie Rostlöser o. dgl., eingesetzt werden. Nachfolgend wird jedoch aus Vereinfachungsgründen und aufgrund des Nutzungsschwerpunkts oft nur von kosmetischer Flüssigkeit gesprochen.

Bei heutigen Abgabevorrichtungen zur Abgabe von insbesondere aufschäumenden oder aufgeschäumten Flüssigkeiten, wie Rasierschaum, oder bei Spenderpumpen besteht häufig das Problem, daß die Flüssigkeiten bzw. daraus gebildete Produkte nach Beendigung der eigentlichen Abgabe nachträglich austreten, insbesondere nachschäumen oder nachtropfen. Dieses Problem ist besonders bei Rasierschaum o. dgl. eklatant, tritt jedoch auch bei nicht aufgeschäumten bzw. nicht aufschäumenden Flüssigkeiten auf und kann insbesondere zu unerwünschten Verschmutzungen der Abgabevorrichtungen führen.

Die WO 01/025116 A1 offenbart einen Abgabekopf für einen unter Druck stehenden Behälter. Bei Betätigung des Abgabekopfes wird ein Abgabeventil des Behälters geöffnet, um einen Schaum oder ein Gel über einen im Abgabekopf gebildeten Auslasskanal auszugeben. Der Auslasskanal ist auslassseitig mit einem Auslassventil versehen, um ein Nachschäumen bzw. Nachtropfen nach Betätigung des Abgabekopfes zu verhindern. Das Auslassventil ist insbesondere als selbstschließendes Schlitzventil ausgeführt. In der Praxis hat sich gezeigt, dass ein derartiges Ventil nicht zufriedenstellend schließt. Des weiteren ist die Herstellung des Abgabekopfes schwierig, da das Auslassventil als separates Teil hergestellt und anschließend dicht eingebaut werden muss.

Die US 2006/0231519 A1 betrifft einen Behälter und ein Verfahren zur Aufnahme und Abgabe flüssiger und fetthaltiger Produkte. Der Behälter weist einen Verschluss auf, der auf einen Behälterhals gesetzt oder gerastet werden kann. Der Verschluss ist aus einem ersten und einem zweiten Material hergestellt, wobei die Materialien gegeneinander gespritzt sein können. Die Abgabe des flüssigen Produkts erfolgt nach Entfernen des Verschlusses vom Behälter durch einen zu montierenden Nippel.

Die DE 103 08 727 B3 betrifft ein Verbundbauteil aus einem elastischen und einem harten Kunststoff. Die harte Komponente wird in denjenigen Bereichen, die mit der weichen Komponente verbunden werden soll mit einem Plasmastrahl behandelt und anschließend wird die elastische Komponente an die harte Komponente angespritzt. Eine Durchflussmembran, die beim Anströmen eines Mediums öffnet, kann bereitgestellt werden.

Der vorliegenden Erfindung liegt die Aufgabe zugrunde, eine verbesserte Abgabevorrichtung anzugeben, so dass ein einfacher, kostengünstiger Aufbau ermöglicht wird.

Die obige Aufgabe wird durch eine Abgabevorrichtung gemäß Anspruch 1 gelöst. Vorteilhafte Weiterbildungen sind Gegenstand der Unteransprüche.

Ein auch unabhängig realisierbarer Aspekt der vorliegenden Erfindung liegt darin, ein erstes Bauteil aus einem ersten Material mit dem zweiten Material abzudecken bzw. zu bedecken, um eine Verbindung mit einem weiteren Bauteil bzw. Material zu ermöglichen. Hierbei kann eine besonders bevorzugte Vorbehandlung zur Verbindung des zweiten Materials mit dem ersten Material und/oder zur Verbindung des weiteren Materials mit dem zweiten Material eingesetzt werden.

Ein anderer Aspekt der vorliegenden Erfindung liegt darin, die Verbindung von zwei Materialien, insbesondere gleichen oder unterschiedlichen Kunststoffen, dadurch zu ermöglichen, dass ein Material bzw. dessen Oberfläche vorbehandelt wird, so dass das andere Material insbesondere unmittelbar gegen das erste Material gespritzt und dadurch mit diesem verbunden werden kann. Besonders bevorzugt sind dann keine weiteren Maßnahmen, Bearbeitungen, Haftvermittler o. dgl. erforderlich, Die Vorbehandlung erfolgt insbesondere durch Plasmabehandlung und/oder Bestrahlung.

Nach der Vorbehandlung kann das weitere bzw. zweite Material vorzugsweise durch sogenannte "Bi-Injection" (also in der Spritzform, in der zuvor das erste Material gegossen bzw. gespritzt wurde) direkt gegen das vorbehandelte bzw. erste Material gespritzt und dadurch mit diesem fest verbunden werden. unter fester Verbindung bzw. Verbindung ist bei der vorliegenden Erfindung vorzugsweise eine chemische und/oder Verbindung zu verstehen.

Gemäß einem weiteren besonders bevorzugten Aspekt erfolgt die Vorbehandlung nur bereichsweise bzw. nur in einem gewünschten Bereich. Dieser Bereich kann durch eine Maske, Blende o. dgl. bei der Vorbehandlung sehr einfach und kostengünstig festgelegt werden. Eine Verbindung bzw. Haftung der beiden Materialien, insbesondere des zweiten Materials auf dem ersten Material, erfolgt dann insbesondere nur in dem vorbehandelten Bereich. So ist es beispielsweise möglich, das zweite Material gegen das erste Material vollflächig zu spritzen, aber letztendlich nur in dem vorbehandelten Teilbereich eine Verbindung mit dem ersten Material zu erreichen. In dem anderen Bereich kann sich das zweite Material bzw. das davon gebildete Bauteil o. dgl. - je nach Bedarf, Konstruktion o dgl. - wieder lösen und beispielsweise eine mit der Flüssigkeit in Kontakt stehende Kammer, einen Pumpenraum oder besonders bevorzugt ein Ventil oder einen Auslaßkanal, der sich beispielsweise wieder schließt, o, dgl. bilden.

Weitere Vorteile, Merkmale, Eigenschaften und Aspekte der vorliegenden Erfindung ergeben sich aus den Ansprüchen und der folgenden Beschreibung bevorzugter Ausführungsformen anhand der Zeichnung. Es zeigt:
- Fig. 1: einen schematischen Schnitt einer vorschlagsgemäßen Abgabevorrichtung gemäß einer ersten Ausführungsform;
- Fig. 2: einen schematischen Teilschnitt einer vorschlagsgemäßen Abgabevorrichtung gemäß einer zweiten Ausführungsform;
- Fig. 3: einen schematischen Teilschnitt einer vorschlagsgemäßen Abgabevorrichtung gemäß einer dritten Ausführungsform;
- Fig. 4: einen schematischen Schnitt einer vorschlagsgemäßen Abgabevorrichtung gemäß einer vierten Ausführungsform;
- Fig. 5: einen schematischen Schnitt einer vorschlagsgemäßen Abgabevorrichtung gemäß einer funken Ausführungsform;
- Fig. 6: einen schematischen Schnitt einer vorschlagsgemäßen Abgabevorrichtung gemäß einer sechsten Ausführungsform;
- Fig. 7: eine perspektivische Ansicht der Abgabevorrichtung gemäß Fig. 6;
- Fig. 8: einen schematischen Schnitt einer vorschlagsgemäßen Abgabevorrichtung gemäß einer siebten Ausführungsform;
- Fig. 9: eine ausschnittsweise Vergrößerung von Fig. 8;
- Fig. 10: einen schematischen Schnitt einer vorschlagsgemäßen Abgabevorrichtung gemäß einer achten Ausführungsform; und
- Fig. 11: eine perspektivische Ansicht der Abgabevorrichtung gemäß Fig. 10.

In den teilweise nicht maßstabsgerechten, nur schematischen Figuren werden für gleiche oder ähnliche Teile dieselben Bezugszeichen verwendet, wobei entsprechende oder vergleichbare Eigenschaften und Vorteile erreicht werden, auch wenn eine wiederholte Beschreibung weggelassen ist.

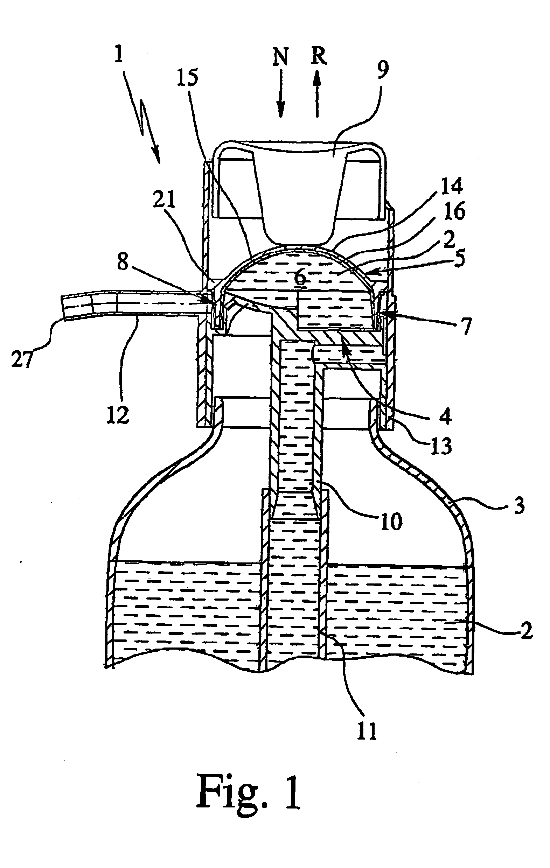

Fig. 1 zeigt eine erste Ausführungsform einer vorschlagsgemäßen Abgabevorrichtung 1 zur Abgabe einer vorzugsweise kosmetischen Flüssigkeit 2, im eingangs genannten Sinn. Die Flüssigkeit 2 kann wesentlich höher viskos sein als Wasser oder ggf. sogar pastös. Insbesondere kann sie einen Schaum oder Gel bilden. Die Flüssigkeit 2 kann auch Gas in flüssiger und/oder sonstiger Form enthalten.

Der Abgabevorrichtung 1 ist vorzugsweise ein Behälter 3 oder sonstiges Reservoir zur Versorgung mit der Flüssigkeit 2 zugeordnet, an dem die Abgabevorrichtung 1 Bedarfsweise lösbar befestigt ist. So kann gegebenenfalls ein Austausch des Behälters 3 und/oder ein Nachfüllen der Flüssigkeit 2 erfolgen. Alternativ kann die Abgabevorrichtung 1 auch ein Reservoir für die Flüssigkeit 2 oder den Behälter selbst bilden.

Die Abgabevorrichtung 1 weist ein vorzugsweise ein erstes Gehäuseteil, Bauteil bzw. Unterteil 4 und ein weiteres Bauteil 5, insbesondere ein Oberteil, auf. Die Bezeichnungen "Unterteil" und "Oberteil" entsprechen bei der Darstellung gemäß Fig. 1 der bevorzugten Anordnung bzw. Ausrichtung der Abgabevorrichtung 1 bei normaler Benutzung. Dies ist jedoch nicht zwingend der Fall. Dementsprechend können je nach Bedarf, Anwendung, Ausbildung u. dgl. das Unterteil 4 und das Bau- bzw. Oberteil 5 auch in beliebiger räumlicher Ausrichtung zueinander stehen bzw. ausgerichtet sein.

Das Unterteil 4 ist vorzugsweise starr und/oder einstückig ausgebildet, insbesondere aus einem geeigneten Kunststoff gespritzt.

Das Bauteil 5 ist vorzugsweise elastisch verformbar ausgebildet, Die vorschlagsgemäße Ausbildung des Bauteils 5 wird später näher erläutert,

Die Abgabevorrichtung 1 weist einen Aufnahme- oder Pumpraum 6 für die Flüssigkeit 2 auf, der insbesondere ausschließlich von bzw. zwischen dem Bauteil 5 und dem Unterteil 4 gebildet oder begrenzt ist.

Vorzugsweise bildet das Bauteil 5 ggf. zusammen mit dem Unterteil 4 ein Einlaßventil 7 und/oder ein Auslaßventil 8. Jedoch können die Ventile 7, 8 auch separat gebildet sein. Aufgrund der Ventile 7, 8 wird vorzugsweise die Funktionalität einer Pumpe ermöglicht. Die Ventile 7, 8 sind vorzugsweise als selbst schließende Einwegventile ausgebildet.

Wenn der Pumpraum 6 mit Flüssigkeit 2 gefüllt ist, wie in Fig. 1 dargestellt, kann durch Verformen des Bauteils 5 das Volumen des Pumpraums 6 verkleinert und dadurch Flüssigkeit 2 aus dem Pumpraum 6 verdrängt und ausgegeben werden. Insbesondere wird hierzu ein optionales Betätigungselement 9 vorzugsweise manuell in Richtung des Pfeils N und dadurch das Bauteil 5 zumindest bereichsweise niedergedrückt. Jedoch ist es beispielsweise auch möglich, daß ein nicht dargestellter Benutzer unmittelbar auf das Bauteil 5 zur Ausgabe von Flüssigkeit 2 drückt.

Die verdrängte Flüssigkeit 2 wird über das Auslaßventil 8 aus- bzw. abgegeben. Das Öffnen des Auslaßventils 8 erfolgt insbesondere selbsttätig, vorzugsweise aufgrund des Flüssigkeitsdrucks, und/oder - ggf. zusätzlich - aufgrund einer entsprechenden Verformung des Bauteils 5 beim Niederdrücken.

Aufgrund der Eigenelastizität bzw. der Rückstellkraft des Bauteils 5 erfolgt dann nach dem Loslassen ein selbsttätiges Rückstellen gemäß Pfeil R in die in Fig. 1 gezeigte Ausgangslage, wobei neue Flüssigkeit 2 über das Einlaßventil 7 in den Pumpraum 6 aufgenommen, insbesondere eingesaugt, wird. Das Öffnen des Einlaßventils 7 während des Rückstellens erfolgt vorzugsweise aufgrund des dann im Pumpraum 6 herrschenden Unterdrucks. Während des Rückstellens bzw. erneuten Füllens des Pumpraums 6 bleibt das Auslaßventil 8 geschlossen.

Das Bauteil 5 weist vorzugsweise einen hier ringförmigen Abschnitt auf, der insbesondere das Einlaßventil 7 und/oder das Auslaßventil 8 bildet.

Die Ausgabe von Flüssigkeit 2 durch die Abgabevorrichtung 1 erfolgt insbesondere in nicht zerstäubtem Zustand über einen Abgabekanal 12 oder dgl. Grundsätzlich ist jedoch auch eine Zerstäubung der Flüssigkeit 2 mittels der Abgabevorrichtung 1 möglich.

Die Abgabevorrichtung 1 weist vorzugsweise ein Verbindungsteil 13 zur Halterung des Bauteils 5 und insbesondere Verbindung des Bauteils 5 mit dem Unterteil 4 auf. Insbesondere ist das Verbindungsteil 13 im wesentlichen hülsenförmig und/oder starr - zumindest im Vergleich zum Bauteil 5 - ausgebildet. Besonders bevorzugt ist das Verbindungsteil 13 direkt an das Bauteil 5 angespritzt, insbesondere durch sogenannte "Bi-Injection", also Spritzen eines anderen Materials gegen ein erstes Material. Besonders bevorzugt ist das Bauteil 5 peripher umlaufend am Verbindungsteil 13 gelagert bzw. gehalten.

Das Unterteil 4 ist vorzugsweise in das Verbindungsteil 13 eingesetzt, beispielsweise eingeklebt, eingeklemmt oder eingerastet.

Jedoch ist es auch möglich, daß das Bauteil 5 nur direkt mit dem Unterteil 4 verbunden oder vorzugsweise zumindest im wesentlichen selbstdichtend und/oder selbsthaltend am Unterteil 4 gehalten ist. Bedarfsweise können zusätzlich zur Verbindung auch hinterschnittene Abschnitte, Rastungen oder dergleichen ineinandergreifen.

Beim Darstellungsbeispiel ist das Unterteil 4 vorzugsweise starr oder relativ fest, zumindest im Vergleich zu dem dagegen relativ weichen, flexiblen und/oder elastischen Bauteil 5 ausgebildet.

Beim Darstellungsbeispiel bildet das Bauteil 5 eine vorzugsweise durchgehende, insbesondere gewölbte Wandung 14 zumindest im Bereich des Pumpraums 6. Die Wandung 14 bildet insbesondere den primär verformbaren Bereich, des Bauteils 5. Beim Darstellungsbeispiel ist das Bauteil 5 bzw. die Wandung 14 vorzugsweise kuppel- bzw. kalottenförmig, insbesondere halbkugelförmig, ausgebildet. Jedoch sind auch andere Formen und/oder andere Einsatzzwecke des Bauteils 5, beispielsweise für Behälterwandungen, Ventilteile, Federabschnitte oder dergleichen - je nach Anwendungsfall - möglich.

Bisher waren das Unterteil 4 und das Bauteil 5 jeweils vorzugsweise einstückig aus einem einzigen Material hergestellt. Vorschlagsgemäß ist bzw. sind das Unterteil 4 und/oder das Bauteil 5 jedoch modifiziert, wie insbesondere nachfolgend erläutert und/oder in den Ansprüchen offenbart.

Beispielhaft wird nachfolgend auf den bevorzugten Aufbau des Bauteils 5 näher eingegangen. Entsprechendes gilt aber auch für das Unterteil 4 und/oder sonstige Teile der Abgabevorrichtung 1.

Die Wandung 14 besteht aus einem ersten Material 15. Vorzugsweise besteht das Bauteil 5 zumindest im wesentlichen aus diesem ersten Material, insbesondere auch dessen sonstige Abschnitte bzw. Bereiche, wie Ventilklappen, Abstützungen, Halteabschnitte, Flanschabschnitte, Verstärkungen, od. dgl.

Das Bauteil 5 ist vorzugsweise spritzgegossen. Das erste Material 15 ist vorzugsweise ein Kunststoff, insbesondere ein Elastomer und/oder Thermoplast. Jedoch kann es sich grundsätzlich auch um ein sonstiges Material handeln. Dies gilt insbesondere, wenn das Bauteil 5 nicht (nur) die Wandung 14 für den Pumpraum 6 oder ein sonstiges Pumpenteil, sondern eine andere Komponente der Abgabevorrichtung 1 bildet.

Das erste Material 15 ist vorzugsweise ein Elastomer, Gummi oder sonstiger Termoplast. Bevorzugt wird TPE (thermoplastisches Elastomer), TPV, TEEE (thermoplastische Elastomere mit Ether- und Ester-Gruppen), besonders bevorzugt wird auch TPU (thermoplastisches Urethan) eingesetzt.

Vorschlagsgemäß ist das Bauteil 5 insbesondere bereichsweise, vorzugsweise zumindest im Bereich des Pumpraums 6 bzw. der Wandung 14 bzw. in sonstigen mit der Flüssigkeit 2 in Kontakt kommenden Bereichen und/oder alternativ in Bereichen, die mit einem weiteren Material oder Bauteil verbunden sind bzw. werden, mit einem zweiten Material 16 versehen bzw, abgedeckt.

Vorzugsweise handelt es sich bei dem zweiten Material 16 ebenfalls um ein Elastomer und/oder einen Thermoplasten, bedarfsweise aber auch um ein sonstiges Material. Besonders bevorzugt handelt es sich bei dem zweiten Material 16 um einen lebensmittelechten und/oder gegenüber der Flüssigkeit 2 unempfindlichen bzw. beständigen Kunststoff, wie ein Polyolefin, insbesondere PP (Polypropylen) oder PE (Polyethylen), besonders bevorzugt UPE, TPEE, TEEE, oder aber auch um TPU.

Das erste Material 15 und das zweite Material 16 sind vorzugsweise verschieden, weisen also zumindest unterschiedliche Eigenschaften und/oder zumindest unterschiedliche Zusammensetzungen auf. Durch die Kombination verschiedener Materialien lassen sich wesentlich einfacher die gewünschten Eigenschaften des Bauteils 5, beispielsweise im Bereich der Wandung 14 bzw. in dem für das Pumpen elastisch verformbaren Bereich, erreichen,

Bei der ersten Ausführungsform ist das erste Material 15 des Bauteils 5 vorzugsweise vollständig in dem Bereich, der mit der Flüssigkeit 2 in Kontakt steht oder kommt, durch das zweite Material 16 abgedeckt. Insbesondere wird also eine durchgehende Abdeckung bzw. Schicht oder Beschichtung aus dem zweiten Material 16 gebildet.

Das zweite Material 16 bzw. die Schicht ist vorzugsweise fest, unlösbar und/oder vollflächig mit dem ersten Material 15 verbunden. Hierzu ist das zweite Material 16 insbesondere durch die sogenannte "Bi-Injection" an das erste Material 15 angespritzt, wobei das erste Material teilweise eine zumindest im wesentlichen glatte oder rauhe Oberfläche oder eine mit Hinterschneidungen, Ausnehmungen, Durchbrechungen oder dergleichen versehene Oberfläche aufweisen bzw. bilden kann.

Das erste Material 15 bzw. dessen Oberfläche ist vor dem Auspritzen des zweiten Materials 16 vorzugsweise zumindest bereichsweise vorbehandelt. Insbesondere erfolgt eine Vorbehandlung durch Plasmabehandlung und/oder Bestrahlung. Durch die Vorbehandlung können Radikale gebildet und/oder Polymerketten aufgebrochen werden und/oder eine bessere oder überhaupt eine Bindung zwischen dem ersten Material 15 und dem zweiten Material 16 ermöglicht werden.

Die Vorbehandlung kann bei Bedarf nur bereichsweise erfolgen. Beim Darstellungsbeispiel erfolgt die Vorbehandlung vorzugsweise zumindest über die gesamte Fläche der Wandung 14, um in diesem Bereich eine vollflächige Verbindung mit dem zweiten Material 16 bzw. der davon gebildeten Schicht zu erreichen.

Wenn das zweite Material 16 an, gegen oder auf das erste Material 15 mit vorbehandelter Oberfläche gespritzt wird, kann sich das zweite Material 16 mit dem ersten Material 15 insbesondere chemisch und/oder fest und/oder dicht und/oder unlösbar - insbesondere nur in dem vorbehandelten Bereich 17 - verbinden.

Bei der "Bi-Injection" erfolgt das Spritzen des zweiten Materials 16 insbesondere in der gleichen Spritzform, in der das Bauteil 5 bzw. die Wandung 14 hergestellt wird. Insbesondere ist ein Entnehmen des Bauteils 5 nicht erforderlich. Dies gestattet eine besonders einfache Herstellung.

Alternativ oder zusätzlich kann das zweite Material 16 grundsätzlich auch durch Kleben, Schweißen oder in sonstiger geeigneter Weise, insbesondere durch eine form- und/oder kraftschlüssige Verbindung, beispielsweise durch Klemmen, mit dem Bauteil 5 bzw. der Wandung 14 verbunden sein.

Alternativ kann das zweite Material 16 bzw. die Materialschicht auch nur bereichsweise mit dem ersten Material 15 verbunden oder zusammen mit diesem - beispielsweise in Rand- oder Umfangsbereichen - gehalten sein.

Alternativ oder zusätzlich zu der bevorzugten chemischen Verbindung der beiden Materialien 15, 16 durch Vorbehandlung und anschließendes Anspritzen - insbesondere nach vorheriger Vorbehandlung - auch eine mechanische, insbesondere kraft- oder formflüssige Verbindung möglich.

Die flüssigkeitsseitige bzw. innenseitige Anordnung des zweiten Materials 16 bzw. Abdeckung des ersten Materials 15 schützt das erste Material 15 gegen chemische Einflüsse, insbesondere durch die Flüssigkeit 2 und/oder die Flüssigkeit 2 vor chemischen Einflüssen des ersten Materials 15 oder sonstigen Wechselwirkungen. So ist es beispielsweise möglich, nicht lebensmittelechte Materialien und/oder nicht gegenüber der Flüssigkeit 2 resistente Materialien als erstes Material 15 einzusetzen, um beispielsweise eine kostengünstige Herstellung und/oder bestimmte mechanische oder sonstige Eigenschaften zu erreichen. Das zweite Material 16 kann dann insbesondere die gewünschte Lebensmittelechtheit bzw. Resistenz gegenüber der Flüssigkeit 2 sicherstellen. Vorzugsweise ist das mit dem Pumpraum 6 bzw. der Flüssigkeit 2 in Kontakt stehende oder kommende zweite Material 16 lebensmittelecht und/oder zumindest in ausreichendem Maße chemisch beständig.

Alternativ oder zusätzlich kann die von dem zweiten Material 16 gebildete Abdeckung auch ein Entweichen von Weichmachern aus dem ersten Material 15 verhindern, um so gewünschte Materialeigenschaften des ersten Materials 15 gewährleisten zu können.

Beim Darstellungsbeispiel überdeckt das zweite Material 16 die dem Pumpraum 6 zugewandte Oberfläche der Wandung 14, bzw. des Bauteils 5. Insbesondere erstreckt sich das zweite Material 16 bzw. die davon gebildete Schicht oder Abdeckung bis zu oder sogar unter ein sonstiges, gegenüber der Flüssigkeit 2 resistentes bzw. inertes Material oder Bauteil, beim Darstellungsbeispiel das Unterteil 4 oder das Verbindungsteil 13.

Zusätzlich oder alternativ zu der Abschirmung des ersten Materials 15 kann das zweite Material 16 auch einer Modifizierung der elastischen Eigenschaften oder sonstigen Eigenschaften des Bauteils 5 dienen, insbesondere wenn das zweite Material 16 einen Verbund mit dem ersten Material 15 bzw. Bauteil 5 bildet.

Es ist anzumerken, daß bei der vorliegenden Erfindung unter elastischen Eigenschaften und Rückstellung insbesondere auch generell die Verformbarkeit des Bauteils 5 als eine wesentliche bzw. damit zusammenhängende Eigenschaft zu verstehen ist.

Die vorliegende Erfindung ist jedoch nicht auf elastische bzw. flexible, insbesondere also verformbare Bauteile beschränkt. Vielmehr kann die Abdeckung durch das zweite Material 16 generell auch bei jeder Art von Bauteil einer Abgabevorrichtung 1 im Sinne der vorliegenden Erfindung eingesetzt werden, insbesondere um einen unmittelbaren Kontakt zwischen Flüssigkeit 2 und Material zu verhindern, die mechanischen Eigenschaften zu beeinflussen oder beispielsweise ein Ventil zu bilden.

Nachfolgend werden weitere Ausführungsformen erläutert, wobei jedoch lediglich wesentliche Unterschiede hervorgehoben werden. Die bisherigen Ausführungen und Erläuterungen gelten also insbesondere entsprechend oder zumindest ergänzend.

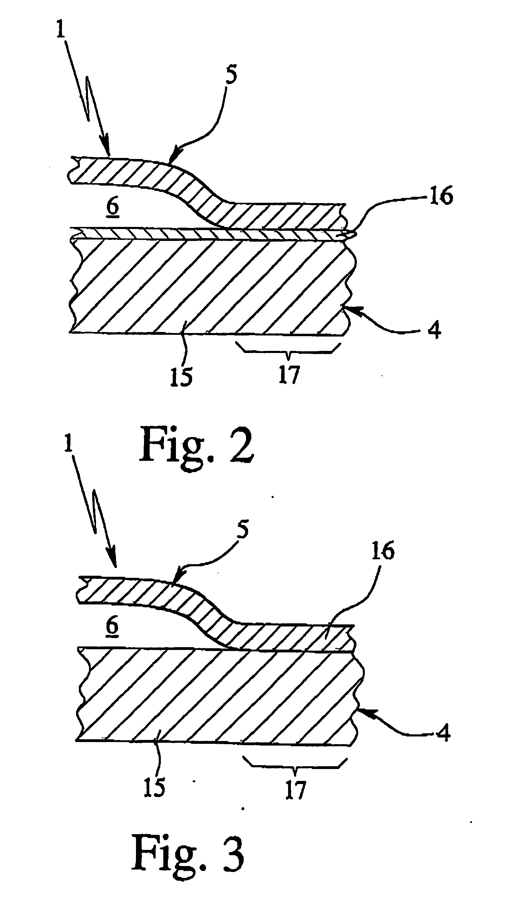

Fig. 2 zeigt eine zweite Ausführungsform in einem ausschnittsweisen, schematischen und nicht maßstabsgerechten Schnitt. Hier ist ein erstes Teil, beispielsweise das Unterteil 4, ein Wandungsabschnitt oder dgl. aus dem ersten Material 15 hergestellt. Die der Flüssigkeit 2 ausgesetzte bzw. zugewandte Oberfläche und/oder ein sonstiger Bereich, insbesondere ein für die Verbindung mit einem weiteren Bauteil vorgesehener Oberflächenbereich des ersten Materials 15, ist mit dem zweiten Material 16 teilweise oder vollständig - insbesondere vollflächig - bedeckt oder abgedeckt. Insbesondere bildet das zweite Material 16 in diesem Fall eine Zwischenlage zu einem weiteren Bauteil, beim Darstellungsbeispiel gemäß Fig. 2 beispielsweise dem Bauteil 5 im Sinne der ersten Ausführungsform.

Insbesondere kann das weitere Material, das mit dem zweiten Material 16 auf der dem ersten Material 15 abgewandten Seite, vorzugsweise Flachseite, insbesondere flächig, verbunden wird, ebenfalls aus dem gleichen Material oder aus einem ähnlichen Material bzw. vorzugsweise aus einem Polyolefin, insbesondere Polypropylen oder Polyethylen, besonders bevorzugt LLPE, TPEE oder TEEE, bestehen.

Bei der zweiten Ausführungsform schützt das zweite Material 16 insbesondere das erste Material 15 bzw. das Bauteil 4 vor einem unmittelbaren Kontakt mit der Flüssigkeit 2. Dementsprechend können wiederum für das erste Material 15 besonders geeignete Materialien mit insbesondere gewünschten mechanischen Eigenschaften oder sonstigen Eigenschaften eingesetzt werden, auch wenn diese Materialen nicht lebensmittelecht und/oder nicht resistent gegenüber der Flüssigkeit 2 sind.

Alternativ oder zusätzlich dient hier das zweite Material 16 bzw. die davon gebildete Zwischenschicht als Haftvermittler, um das weitere Bauteil 5 mit dem ersten Bauteil bzw. Unterteil 4 mittelbar verbinden zu können. So können wiederum besonders günstige Materialkombinationen eingesetzt werden, insbesondere um die gewünschten mechanischen oder sonstigen Eigenschaften zu verbessern.

Wie bereits erwähnt, liegt ein Aspekt darin, daß zur Verbesserung der Verbindbarkeit von zwei Materialien, insbesondere Kunststoffen, ein Material bzw. dessen Oberfläche durch Plasmabehandlung und/oder durch Bestrahlung, beispielsweise mittels Elektronen, Positronen, Mikrowellen, UV-Strahlung, Röntgenstrahlung, Laserlicht o. dgl., vorbehandelt wird, um eine besonders gute oder überhaupt eine Haftung des anderen Materials auf dem ersten, vorbehandelten Material zu ermöglichen. Besonders bevorzugt ist dann kein sonstiger Haftvermittler o. dgl. erforderlich. Insbesondere können so auch Materialien, die normalerweise nicht miteinander verbindbar sind, wie TPU einerseits und PE oder PP andererseits, miteinander verbunden werden. Insbesondere wird dadurch ermöglicht, das weitere Material direkt gegen das vorbehandelte Material zu spritzen, insbesondere durch die bereits genannte "Bi-Injection" o. dgl., um unmittelbar einen festen Verbund aus den beiden Materialien zu erreichen.

Die vorgenannte Vorbehandlung kann insbesondere auch bei jeder Ausführungsform zur Herstellung einer guten bzw. festen bzw. ausschließlichen Verbindung zwischen Bauteil 4 und dem zweiten Material 16 und/oder auch zur Herstellung einer festen Verbindung zwischen dem zweiten Material 16 bzw. der Zwischenlage und dem weiteren Material bzw. Bauteil 5 o. dgl. verwendet werden. Gemäß einer besonders bevorzugten Variante erfolgt die Vorbehandlung nur in einem begrenzten Bereich 17. Beispielsweise kann der Bereich 17 durch eine Blende, Maske o. dgl. festgelegt werden, so daß nur in dem gewünschten Bereich 17 die gewünschte Plasmabehandlung, Bestrahlung o. dgl. zur Vorbehandlung erfolgt.

Bei der zweiten Ausführungsform wird beispielsweise die dem ersten Material 15 bzw. Unterteil 4 abgewandte Seite des zweiten Materials 16 nur in dem schematisch angedeuteten Oberflächenbereich 17 vorbehandelt. Das weitere Material bzw. Bauteil 5 o. dgl. haftet vorzugsweise dann nur in diesem vorbehandelten Bereich 17. Insbesondere ist es möglich und vorgesehen, das weitere Material unmittelbar und vollflächig gegen das zweite Material 16 bzw. die davon gebildete Oberfläche oder Wandung 14 zu spritzen oder in sonstiger Weise aufzubringen. Aufgrund der nur bereichsweisen Vorbehandlung erfolgt dann vorzugsweise eine Haftung bzw. Verbindung nur in dem vorbehandelten Bereich 17. Das weitere Bauteil 5 kann sich also dann beispielsweise zur Bildung der Pumpenkammer 6 wieder von dem zweiten Material 16 in dem nicht vorbehandelten Bereich 17 lösen, beispielsweise abgehoben werden o. dgl., insbesondere um die Pumpkammer 6, einen Kanal für die Flüssigkeit 2 oder ein daraus gebildetes Produkt, wie einen Schaum, oder ein Ventil, einen Auslaßkanal o. dgl. zu bilden. So wird eine sehr einfache Herstellung und auf einfache Weise die Festlegung gewünschter Verbindungsbereiche 17 ermöglicht. Entsprechendes gilt für die Verbindung des zweiten Materials 16 mit dem ersten Material 15.

Die dritte Ausführungsform entspricht im wesentlichen der zweiten Ausführungsform, wobei lediglich die Abdeckung bzw. Zwischenschicht aus dem zweiten Material 16 weggelassen wurde. Auch bei der dritten Ausführungsform wird wiederum vorzugsweise durch eine Vorbehandlung im genannten Sinne ein Verbinden des Bauteils 5 bzw. zweiten Materials 16 mit dem ersten Material 15 oder Unterteil 4 o. dgl. ermöglicht. Insbesondere können hierbei jede Art von geeigneten Kunststoffen miteinander kombiniert werden.

Bei der dritten Ausführungsform ist vorzugsweise zwischen den beiden Bauteilen 4 und 5 wiederum die Pumpenkammer 6, ein vorzugsweise selbsttätig kollabierender Auslaßkanal oder ein sonstiger Raum für die Flüssigkeit 2 gebildet. Dementsprechend bestehen die Bauteile 4 und 5 vorzugsweise aus gegenüber der Flüssigkeit 2 resistenten und/oder lebensmittelechten Materialien.

Bei der dritten Ausführungsform kann bedarfsweise wiederum die Vorbehandlung nur in einem gewünschten Bereich 17 o. dgl. erfolgen, um dann auch vorzugsweise nur in diesem Bereich 17 eine Verbindung bzw. Haftung des Bauteils 5 bzw. zweiten Materials 16 mit dem ersten Bauteil 4, ersten Material 15 o. dgl. zu erreichen.

Die voranstehend erläuterte bereichsweise Vorbehandlung kann auch für sonstige Zwecke bei der vorschlagsgemäßen Abgabevorrichtung 1 oder sonstigen Abgabevorrichtungen o. dgl. eingesetzt werden. Bevorzugte Beispiele folgen.

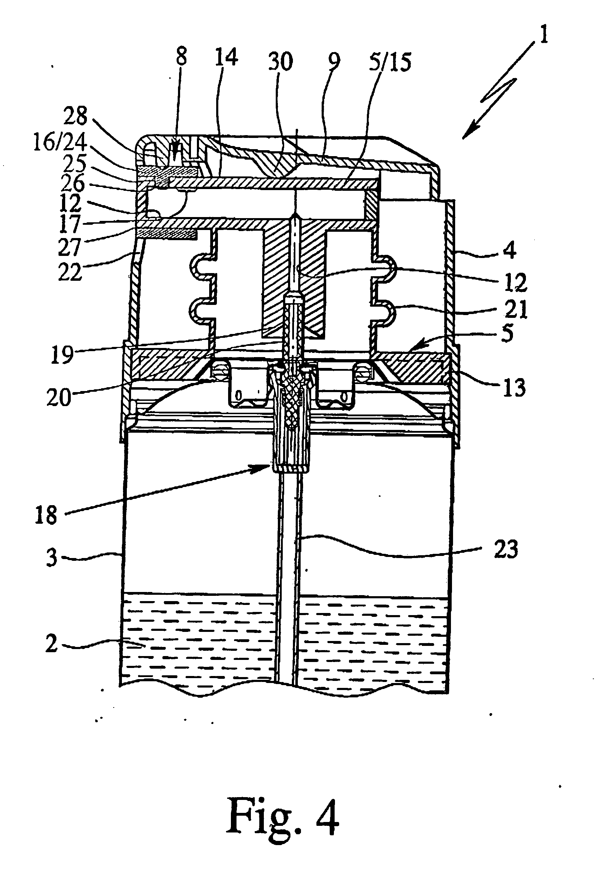

Fig. 4 zeigt in einem schematischen Schnitt eine vierte Ausführungsform der vorschlagsgemäßen Abgabevorrichtung 1, die hier als Abgabekopf zur Abgabe einer Flüssigkeit 2 im eingangs genannten Sinn ausgebildet ist.

Insbesondere ist die Abgabevorrichtung 1 zur nicht-sprühenden Abgabe der Flüssigkeit 2 ausgebildet. Insbesondere erfolgt eine Ausgabe der Flüssigkeit 2 als Schaum, vorzugsweise als Rasierschaum o. dgl. Die Flüssigkeit 2 ist hierzu insbesondere selbstaufschäumend ausgebildet und/oder wird bei der Abgabe aufgeschäumt.

Jedoch kann die Flüssigkeit 2 grundsätzlich auch im nicht-aufgeschäumten Zustand abgegeben werden und insbesondere auch nicht-aufschäumend ausgebildet sein. Weiter ist es auch möglich, daß die Flüssigkeit 2 nur ganz gering aufschäumt, so daß das Aufschäumen beispielsweise lediglich das Volumen etwas vergrößert, aber im wesentlichen eine flüssige oder pastöse Konsistenz bei der Abgabe beibehalten wird.

Es ist anzumerken, daß an Stelle der beispielhaft erläuterten Abgabe der Flüssigkeit 2 als Schaum grundsätzlich auch jede sonstige Abgabe der Flüssigkeit 2 - ggf. auch als pastöse Masse, als Gel, als Tropfen, als Strahl oder als Sprühnebel - in Frage kommt.

Die Abgabevorrichtung 1 ist vorzugsweise mit einem Reservoir, nämlich einem Behälter 3, für die auszugebene Flüssigkeit 2 versehen oder verbunden. Das Reservoir kann also einen Teil der Abgabevorrichtung 1 bilden oder kann an diese angeschlossen sein.

Beim Darstellungsbeispiel ist das Reservoir als vorzugsweise starrer Behälter 3, insbesondere als Druckbehälter ausgebildet. Der Behälter 3 ist insbesondere länglich und/oder zylindrisch und/oder starr - besonders bevorzugt als metallische Dose - für die Flüssigkeit 2 ausgebildet.

Die Flüssigkeit 2 im Reservoir ist entweder unter Druck setzbar oder steht unter Druck. Insbesondere enthält der Behälter 3 oder die Flüssigkeit 2 ein geeignetes Reibmittel, vorzugsweise ein flüchtiges und/oder brennbares Treibmittel, komprimiertes Gas und/oder Kohlendioxid.

Der Behälter 3 weist besonders bevorzugt stimseitig ein Abgabeventil 18 auf, an das die Abgabevorrichtung 1 bzw. der davon gebildete Abgabekopf angeschlossen oder anschließbar ist.

Die Abgabevorrichtung 1 weist einen Abgabekanal 12 mit einem zugeordneten Auslaßventil 8 auf. Besonders bevorzugt ist das Auslaßventil 8 am Abgabeende 27 des Abgabekanals 12 bzw. der Abgabevorrichtung 1 angeordnet.

Beim Darstellungsbeispiel weist die Abgabevorrichtung 1 vorzugsweise ein Gehäuseteil 4 auf, das mit dem Reservoir bzw. Behälter 3 verbindbar, besonders bevorzugt klemmend und/oder rastend darauf aufsetzbar ist.

Die Abgabevorrichtung 1 weist weiter ein vorzugsweise in das Gehäuseteil 4 eingesetztes Bauteil 5 auf, das den Abgabekanal 12 bildet und an das Abgabeventil 18 anschließbar ist. Beim Darstellungsbeispiel ist das Bauteil 5 mit einem Anschlußabschnitt 19 zur insbesondere steckbaren Verbindung mit dem Abgabeventil 18 bzw. einem Stutzen 20 des Abgabeventils 18 versehen.

Beim Darstellungsbeispiel sind die beiden Teile 4, 5 als separate Teile ausgebildet. Das Bauteil 5 ist in das Gehäuseteil 4 eingesteckt, eingerastet oder in sonstiger geeigneter Weise - insbesondere Ober das Verbindungsteil 13 - damit verbunden. Jedoch können die beiden Bauteile 4, 5 auch beispielsweise einstückig ausgebildet sein.

Besonders bevorzugt schließt sich keine Düse, kein weiterer Kanal o, dgl. an das Auslaßventil 8 bzw. den Abgabekanal 12 an. Vielmehr öffnen sich diese vorzugsweise "ins Freie". So kann die Flüssigkeit 2 nach Austritt aus dem Abgabekanal 12 bzw. Auslaßventil 8 von einem nicht dargestellten Benutzer vorzugsweise unmittelbar aufgenommen bzw. benutzt werden.

Das Auslaßventil 8 ist vorzugsweise derart ausgebildet, daß es in Abhängigkeit vom anstehenden Flüssigkeitsdruck, insbesondere bei Überschreiten eines vorbestimmten Mindestdrucks, öffnet. Besonders bevorzugt ist dieser Mindestdruck höher als ein Aufschäumdruck der vorzugsweise selbstaufschäumenden Flüssigkeit 2. Hingegen ist dann der Abgabedruck (bei geöffneten Abgabeventil 18) und damit der anstehende Flüssigkeitsdruck wiederum höher als der Mindestdruck, so daß zur gewünschten Flüssigkeitsabgabe und Erzeugung bzw. Ausgabe von Schaum das Auslaßventil 8 auch öffnet.

Die Abgabevorrichtung 1 weist ferner vorzugsweise ein Betätigungselement 9 auf, das beim Darstellungsbeispiel vom Gehäuseteil 4 gebildet bzw. daran angeformt ist, aber auch als separates Teil ausgeführt sein kann. Jedoch sind auch andere konstruktive Lösungen möglich.

Das öffnen des Abgabeventils 18 erfolgt durch Niederdrücken der Abgabevorrichtung 1 bzw. des Bauteils 5 bzw. des Betätigungselements 9. Beispielsweise kann das Betätigungselement 9 hierzu über einen Betätigungsabschnitt 30 auf das Bauteil 5 einwirken.

Das Bauteil 5 weist beispielsweise einen federnd nachgiebigen Abschnitt 21 auf, so daß das Bauteil 6 mit seinem Anschlußabschnitt 19 zum Abgabeventil 18 hin verlagerbar und dadurch das Abgabeventil 18 öffenbar ist

Der federnde Abschnitt 21 ist beim Darstellüngsbeispiel besonders bevorzugt balgartig ausgebildet und/oder ist vorzugsweise nur in einer translatorischen Richtung, insbesondere der Betätigungsrichtung des Abgabeventils 18, federelastisch. Jedoch sind auch andere konstruktive Lösungen möglich.

Beim Darstellungsbeispiel erfolgt die Rückstellung des Bauteils 5 vorzugsweise ausschließlich durch die Federkräfte des federnden Abschnitts 21. Zusätzlich oder alternativ kann jedoch beispielsweise auch eine nicht dargestellt Rückstell-oder Schließfeder oder eine sonstige konstruktive Lösung eingesetzt werden.

Beim Darstellungsbeispiel ist das Betätigungselement 9 vorzugsweise schwenkbar bzw. kippbar, um das Abgabeventil 18 über das vorzugsweise hier nur translatorisch bewegbare Bauteil 5 zu öffnen.

Mit dem Bauteil 5 sind vorzugsweise auch der Abgabekanal 12 und/oder das Auslaßventil 8 verlagerbar, insbesondere niederdrückbar. Beim Darstellungsbeispiel weist das Gehäuseteil 4 eine entsprechende Durchbrechung 22 der Außenwandung auf, um die genannte, vorzugsweise ebenfalls translatorische Bewegung des Abgabeendes 27 zu ermöglichen. Jedoch sind hier auch andere konstruktive Lösungen möglich.

Bei geöffnetem Abgabeventil 18 kann die im Reservoir bzw. Behälter 3 vorzugsweise unter Druck stehende Flüssigkeit 2 über eine Steigleitung 23 und das geöffnete Abgabeventil 18 in den Abgabekanal 12 strömen. Insbesondere erfolgt dann im Abgabekanal 12 ein zumindest erstes Aufschäumen der Flüssigkeit 2. Bedarfsweise kann hierzu auch eine nicht dargestellte Schaumbildungseinrichtung (zusätzlich oder alternativ) vorgesehen sein. Beispielsweise kann die Flüssigkeit 2 bzw. der Schaum durch ein nicht dargestelltes Gitter geführt und/oder durch Zuführung von Gas bzw. Luft (zusätzlich oder alternativ) aufgeschäumt werden.

Aufgrund des bei geöffnetem Abgabeventil 18 im Abgabekanal 12 herrschenden bzw. anstehenden Flüssigkeitsdrucks bzw. Abgabedrucks öffnet das Auslaßventil 8 vorzugsweise selbsttätig.

Die Flüssigkeit 2 kann dann durch das geöffnete Auslaßventil 8 nach außen bzw. ins Freie entweichen und besonders bevorzugt aufschäumen bzw. weiter aufschäumen oder ein Gel oder ein sonstiges Produkt bilden oder in flüssiger, pastöser oder sonstiger Form ausgegeben werden.

Das Abgabeventil 18 schließt bei Loslassen vorzugsweise wieder selbsttätig. Jedoch kann es sich bei dem Abgabeventil 18 beispielsweise auch um ein Dosierventil oder eine sonstige Ventileinrichtung handeln.

Die Flüssigkeitsabgabe bzw. Schaumerzeugung endet, wenn der im Abgabekanal 12 herrschende Flüssigkeitsdruck bzw. Abgabedruck wieder unter den Mindestdruck fällt, so daß das Auslaßventil 8 schließt. Dies ist dann der Fall, wenn das Abgabeventil 18 - insbesondere durch Loslassen bzw. automatische Rückstellung des Abgabekopfs bzw. Betätigungselements 9 - wieder schließt. Das geschlossene bzw. sich schließende Auslaßventil 8 verhindert dann, daß noch im Abgabekanal 12 befindliche Flüssigkeit 2 bzw. befindlicher Schaum der dgl. in unerwünschter Weise nachträglich austreten bzw. herausschäumen kann.

Das Auslaßventil 8 weist vorzugsweise ein Bauteil 24 auf, das vorzugsweise zumindest teilweise bzw. bereichsweise beweglich ausgebildet ist und/oder insbesondere ein Ventilelement bildet. Insbesondere kann das Ventilelement 24 eine Auslaßöffnung 25 des Abgabekanals 12 verschließen.

Die Auslaßöffnung 25 endet vorzugsweise in einer Oberfläche bzw. der Wandung 14 des Bauteils 5 bzw. Abgabekanals 12, die vom Ventilelement 24 zumindest im Bereich der Auslaßöffnung 25 abgedeckt bzw. abdeckbar ist.

Beim Darstellungsbeispiel ist die Oberfläche bzw. Wandung 14 vorzugsweise gewölbt bzw. gekrümmt bzw. konvex ausgebildet. Besonders bevorzugt handelt es sich um eine ringförmige Oberfläche. Das Bauteil 5 bzw. der Abgabekanal 12 ist zumindest im Bereich der Auslaßöffnung 25 dementsprechend vorzugsweise hohlzylindrisch bzw. zylindrisch oder ringförmig ausgebildet.

Das Ventilelement 24 ist vorzugsweise an die Krümmung der Oberfläche angepaßt und umgibt den Abgabekanal 12 bzw. das Bauteil 5 bzw. die Oberfläche im Bereich der Auslaßöffnung 25 vorzugsweise teilweise und insbesondere vollständig, beim Darstellungsbeispiel ringförmig. Jedoch sind hier auch andere Konstruktionen möglich.

Das Bauteil 5 ist hier aus dem ersten Material 15, insbesondere einem relativ starren Kunststoffmaterial hergestellt.

Das Ventilelement 24 ist aus dem zweiten Material 16 hergestellt, das vorzugsweise elastisch verformbar und insbesondere weicher als das erste Material 15 ist.

Das Ventilelement 24 ist vorzugsweise spritzgegossen, insbesondere durch "Bi-Injection" direkt auf bzw. gegen das Bauteil 5 gespritzt. Dies gestattet eine sehr einfache Herstellung.

Das Ventilelement 24 kann mit einem Vorsprung 26 in die Auslaßöffnung 25 hineinragen, wie beim Darstellungsbeispiel gezeigt. Der Vorsprung 26 ist insbesondere bei dem bevorzugten Anspritzen des Bauteils 24 sehr einfach herstellbar bzw. anformbar.

Bei entsprechendem Flüssigkeitsdruck öffnet das Auslaßventil 8 dadurch, daß sich das Ventilelement 24 zumindest teilweise von dem Bauteil 5 abhebt bzw. radial weitet oder dehnt. Entsprechend kann dann insbesondere auch der optionale Vorsprung 26 zumindest etwas aus der Auslaßöffnung 24 radial nach außen verlagert werden, um so einen Austritt der Flüssigkeit 2 aus dem Abgabekanal 12 durch die Auslaßöffnung 25 hindurch und dann axial nach vorne zum freien Ende des Bauteils 5 bzw. Abgabeende 27 hin zu ermöglichen.

Besonders bevorzugt ist das Ventilelement 24 zumindest bereichsweise fest und/oder dicht mit der Oberfläche des Bauteils 5 bzw. dem ersten Material 15 verbunden. Die Verbindung wird insbesondere durch die genannte Vorbehandlung der Oberfläche bzw. Wandung 14 in dem Bereich 17, in dem eine feste Verbindung gewünscht wird, vor dem Anspritzen des zweiten Materials 16 ermöglicht. Besonders bevorzugt erfolgt die Vorbehandlung durch Plasmabehandlung und/oder Bestrahlung. So können die beiden Materialien 15 und 16, wie PE oder PP einerseits TPU andererseits, die sonst durch Anspritzen nicht miteinander fest verbindbar sind, in dem gewünschten Bereich durch das anschließende Anspritzen des zweiten Materials 16 fest, insbesondere chemisch und/oder dicht, miteinander verbunden werden.

Gemäß einer bevorzugten Ausführungsvariante ist der Verbindungsbereich 17, in dem die genannte Vorbehandlung bzw. feste Verbindung des Ventilelements 24 mit dem Bauteil 5 erfolgt, vorzugsweise ringförmig ausgebildet und/oder nur auf der einem Abgabeende 27 gegenüberliegenden Seite der Auslaßöffnung 25 angeordnet.

Es hat sich überraschend gezeigt und ein Aspekt der vorliegenden Erfindung liegt darin, daß quasi ein "virtueller" Auslaßkanal zwischen den beiden flächig aufeinanderliegenden Materialien 15, 16 bzw. flächig aufeinanderliegenden Bauteilen 5, 24 gebildet wird, der nur bei entsprechenden Flüssigkeitsdruck öffnet und selbsttätig wieder schließt und insbesondere eine Ventilfunktion realisiert und/oder das unerwünschte Nachströmen bzw. Nachschäumen sehr effektiv verhindern kann.

Gemäß einer nicht dargestellten Ausführungsvariante kann der Verbindungsbereich 17 sich auch seitlich neben der Auslaßöffnung 25 bzw. axial zum Abgabeende 27 hin erstrecken, insbesondere die Auslaßöffnung 25 U-förmig umgeben, wobei das offene Ende dann am Abgabeende 27 endet. So kann der "virtuelle" Auslaßkanal insbesondere bedarfsweise längsseitig begrenzt oder - anders ausgedrückt - ein besonders definiertes Abgabeverhalten in einem entsprechend begrenzten Umfangsbereich oder Oberflächenbereich zwischen dem Bauteil 5 und Ventilelement 24 sichergestellt werden.

Gemäß einem weiteren Aspekt wird das Auslaßventil 8 bzw. dessen Ventilelement 24 bei unbetätigter Abgabevorrichtung 1 bzw. geschlossenem Abgabeventil 18 durch einen Anschlag 28 in die geschlossene Stellung - hier also gegen die Auslaßöffnung 25 - (zusätzlich) gedrückt bzw. vorgespannt. Beim Darstellungsbeispiel ist der Anschlag 28 vorzugsweise gehäuseseitig bzw. am Gehäuseteil 4 angeordnet, insbesondere angeformt, und/oder feststehend bzw. stationär ausgebildet.

Im dargestellten, geschlossenen Zustand befindet sich das Bauteil 5 bzw. der Abgabekanal 12 in der oberen Position, so daß der Anschlag 28 unmittelbar auf der der Auslaßöffnung 25 gegenüberliegenden Seite auf das Ventilelement 24 drückt und dadurch das Auslaßventil 8 (zusätzlich) geschlossen hält.

Ein besonderer Vorteil des Auslaßventils 8 liegt darin, daß neben der Vermeidung eines nachträglichen Austritts der Flüssigkeit 2, insbesondere eines Nachschäumens, auch für den Benutzer eine sehr einfache Reinigung ermöglicht wird, da das Auslaßventil 8 vorzugsweise ein sauberes bzw. leicht zu reinigendes Abgabeende 27 bildet.

Beim Darstellungsbeispiel erfolgt die Flüssigkeitsausgabe vorzugsweise im wesentlichen quer, insbesondere senkrecht, zur Niederdrückrichtung bzw. Offnungsrichtung des Abgabeventils 18 und/oder zumindest im wesentlichen horizontal oder quer zur Längsrichtung des Behälters 3.

Weiter ist zu erwähnen, daß sich an das Auslaßende 27 vorzugsweise keine weitere, die Flüssigkeitsabgabe formende Einrichtung, wie eine Düse, einen Kanal oder dgl., anschließt. Dies schließt jedoch nicht aus, daß beispielsweise eine schalenartige Erweiterung, gehäuseseitige Vertiefung oder dgl., in die das Auslaßende 27 mündet, vorgesehen sein kann.

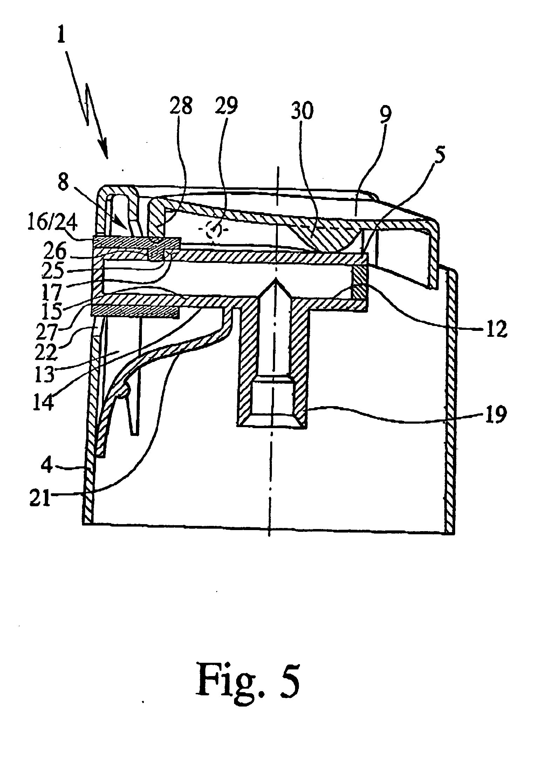

Fig. 5 zeigt eine fünfte Ausführungsform der vorschlagsgemäßen Abgabevorrichtung 1, wobei aus Vereinfachungsgründen der zugeordnete Behälter 3 mit dem Abgabeventil 18 nicht dargestellt ist.

Die fünfte Ausführungsform ist der vierten Ausführungsform sehr ähnlich, so daß nachfolgend nur wesentliche Unterschiede erläutert werden. Insbesondere gelten die bisherigen Ausführungen und Erläuterungen für diese und die weiteren Ausführungsformen ergänzend bzw. entsprechend.

Das Bauteil 5 mit dem Abgabekanal 12 ist bei der fünften Ausführungsform zur Betätigung bzw. zum Öffnen des in Fig. 5 nicht dargestellten Abgabeventils 18 aus der gezeigten Ausgangsstellung kippbar bzw. schwenkbar. Insbesondere ist hier der Abschnitt 21 nicht wie bei der vierten Ausführungsform balgartig ausgebildet, sondern beispielsweise in der Art eines Arms, der beispielsweise seitlich zum Gehäuseteil 4 geführt ist.

Bei der fünften Ausführungsform ist der Anschlag 28 nicht stationär, sondern beweglich ausgebildet. Insbesondere ist der Anschlag 28 am Betätigungselement 9 angebracht.

Das Betätigungselement 9 ist um eine vorzugsweise horizontal bzw. bei der Darstellung gemäß Fig. 5 quer zur Zeichenebene verlaufene Schwenkachse 29 verschwenkbar bzw. verkippbar. Die Schwenkachse 29 liegt vorzugsweise in einer Ebene zwischen dem Anschlag 28 einerseits und dem auf das Bauteil 5 einwirkenden Betätigungsabschnitt 30 andererseits. Dementsprechend wird bei Betätigen bzw. Niederdrücken des Betätigungselements 9 aus der in Fig. 5 gezeigten Stellung der Betätigungsabschnitt 30 nach unten und der Anschlag 28 nach oben bzw. entgegengesetzt bewegt. Dementsprechend kann das Auslaßventil 8 ungehindert öffnen, auch wenn das Bauteil 5 bzw. das Auslaßventil 8 bei betätigter Abgabevorrichtung 1 nicht oder nur relativ wenig nach unten bzw. vom Anschlag 28 weg bewegt wird.

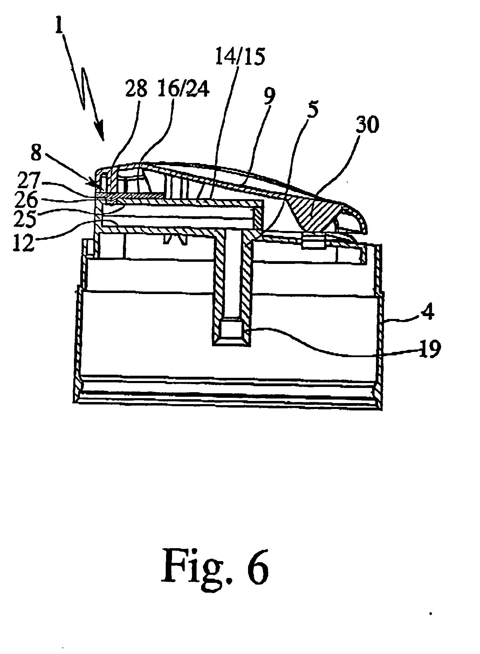

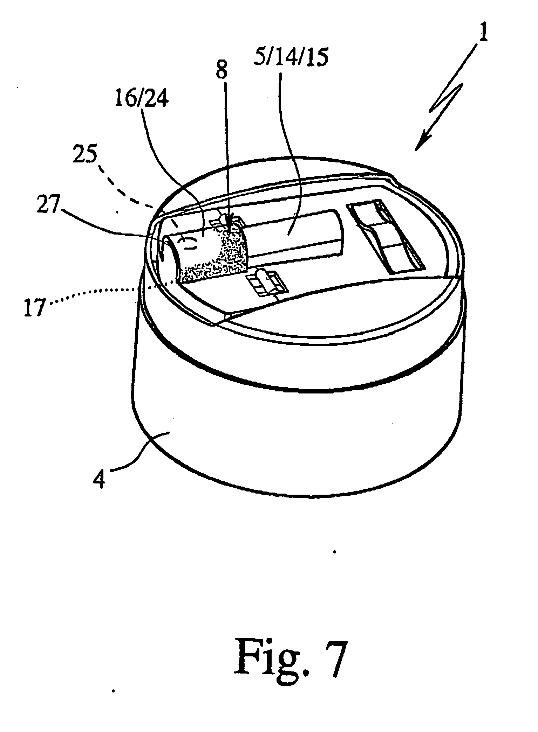

Fig. 6 zeigt in einem schematischen Schnitt eine sechste Ausführungsform, die der fünften Ausführungsform sehr ähnlich ist. Fig. 7 zeigt eine perspektivische Ansicht der Abgabevorrichtung 1 gemäß der sechsten Ausführungsform.

Der Anschlag 28 ist hier zumindest weitgehend stationär angeordnet bzw. zumindest im wesentlichen unbeweglich ausgebildet.

Bei der sechsten Ausführungsform ist das Bauteil bzw. Ventilelement 24 vorzugsweise nicht ringförmig bzw. hohlzylindrisch, sondern nur gewölbt bzw. im wesentlichen halbzylindrisch ausgebildet. Das Bauteil 24 ist vorzugsweise zumindest im Bereich seiner Längskanten fest mit dem Bauteil 5, der Wandung 14 und/oder ersten Material 15 verbunden, vorzugsweise durch eine entsprechende Verbindung nach entsprechender Vorbehandlung und/oder auf sonstige geeignete Weise. Alternativ oder zusätzlich erstreckt sich der Verbindungsbereich 17 vorzugsweise halbringförmig auf der dem Abgabeende 27 abgewandten Seite der Auslaßöffnung 25 über die Wandung 14.

Die Verbindung des Bauteils 5 und Ventilelements 24 in dem gewünschten Bereich 17 (in Fig. 7 gepunktet angedeutet) erfolgt vorzugsweise wiederum durch entsprechende, insbesondere nur bereichsweise Vorbehandlung des ersten Materials 15 und anschließendes Anspritzen des zweiten Materials 16, so daß in dem vorbehandelten Bereich 17 eine entsprechend feste Verbindung zwischen den beiden Materialien 15, 16 erzeugt wird, wie bereits angesprochen.

Jedoch ist es grundsätzlich auch möglich, das Ventilelement 24 in jeder sonstigen geeigneten Art und Weise in den gewünschten Bereichen mit der darunterliegenden Oberfläche bzw. Wandung 14 bzw. dem Bauteil 5 zu verbinden.

Es ist grundsätzlich anzumerken, daß der Begriff "feste" Verbindung bei der vorliegenden Erfindung vorzugsweise im Sinne einer chemischen und/oder dichten Verbindung zu verstehen ist.

Bei der sechsten Ausführungsform sind das Gehäuseteil 4 und das Bauteil 5 vorzugsweise einstückig miteinander ausgebildet, wobei das Gehäuseteil 4 das Bauteil 5 verschwenkbar hält.

Beim Darstellungsbeispiel ist das Betätigungselement 9 vorzugsweise als separates Teil ausgebildet, das insbesondere aufgesetzt, aufgesteckt, aufgeklemmt oder aufgerastet ist. Jedoch kann das Betätigungselement 9 grundsätzlich auch an das Gehäuseteil 4 bzw. Bauteil 5 angeformt sein.

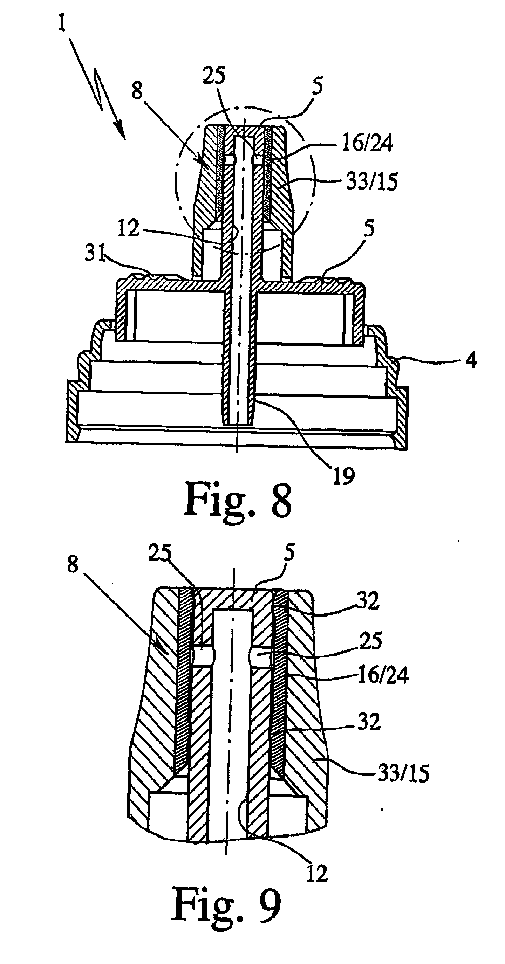

Fig. 8 zeigt in einem schematischen Schnitt eine siebte Ausführungsform der vorschlagsgemäßen Abgabevorrichtung 1. Fig. 9 zeigt eine ausschnittsweise Vergrößerung des Auslaßventils 8.

Bei der siebten Ausführungsform erfolgt vorzugsweise wiederum eine lineare bzw. translatorische Betätigung des zugeordneten (in Fig. 8 und 9 nicht dargestellten) Abgabeventils 18, also ähnlich wie bei der vierten Ausfürungsform, Dementsprechend werden nur wesentliche Unterschiede gegenüber der vierten Ausführungsform nachfolgend erläutert.

Bei der siebten Ausführungsform ist das Bauteil 5 vorzugsweise direkt manuell betätigbar. Insbesondere ist hier zumindest ein entsprechender Betätigungsbereich 31 gebildet.

Das Ventilelement 24 ist wiederum vorzugsweise im wesentlichen hohlzylindrisch ausgebildet und insbesondere mit mindestens einem Ringwulst 32 innenseitig versehen, hier jeweils mit einem Ringwulst 32 im Bereich seiner beiden axialen Enden. Die Ringwulste 32 dienen einer besonders definierten, insbesondere ringförmigen und dichtenden Anlage des Ventilelements 24 am Bauteil 5 bzw. dessen Wandung 14. Die Auslaßöffnung 25 bzw. beim Darstellungsbeispiel beiden Auslaßöffnungen 25 endet bzw. enden zwischen den beiden Ringwulsten 32.

Das Ventilelement 24 ist beim Darstellungsbeispiel durch ein vorzugsweises hohlzylindrisches Halteteil 33 gehalten bzw. gesichert. Das Halteteil 33 umgibt das Ventilelement 24 insbesondere peripher und/oder über die gesamte axiale Länge.

Besonders bevorzugt ist das Ventilelement 24 in das Halteteil 33 eingespritzt bzw. gegen das Halteteil 33 gespritzt. Dies erfolgt vorzugsweise wiederum dadurch, daß die Oberfläche des Halteteils 33 - beim Darstellungsbeispiel die hohlzylindrische Innenmantelfläche - vor dem Anspritzen vorbehandelt wird, wie oben bereits erläutert, um eine feste Verbindung mit dem Ventilelement 24 zu erreichen.

Das Halteteil 33 wird dann zusammen mit dem Ventilelement 24 auf das Bauteil 5 bzw. den Abgabekanal 12 axial aufgeschoben. Je nach Anpassung bzw. radiale Vorspannung des Ventilelements 24 gegen das Bauteil 5 bzw. dessen Wandung 14 ist eine weitere Befestigung bzw. Festlegung des Halteteils 30 an der Abgabevorrichtung 1 nicht mehr erforderlich. Jedoch kann das Halteteil 33 auch zusätzlich mit der Abgabevorrichtung 1 in geeigneter Weise verbunden bzw. daran gesichert sein, beispielsweise durch Klemmen oder Rasten.

Zum Öffnen des Auslaßventils 8 kann das Ventilelement 24 insbesondere im Bereich seines Ringwulstes 32 zum Abgabeende 27 hin elastisch radial nach außen ausweichen (vorzugsweise ist das Halteteil 33 entsprechend radial ausgenommen), um so die Flüssigkeit 2 bzw. den davon gebildeten Schaum oder dgl. ausgeben zu können.

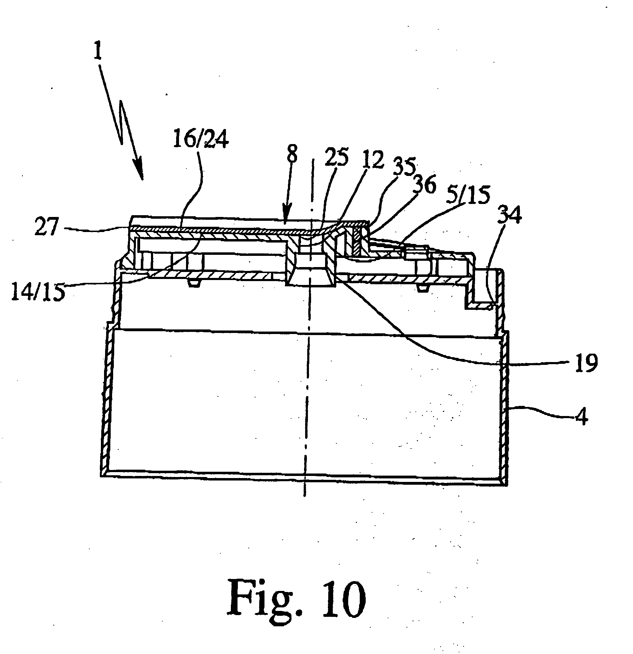

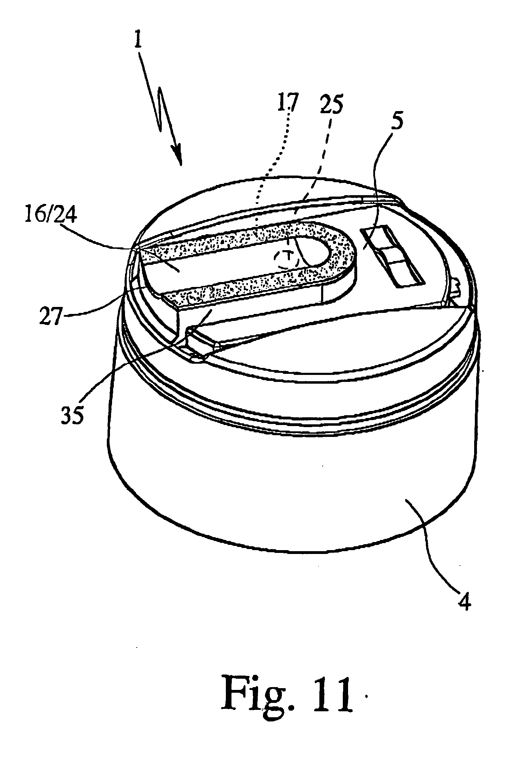

Fig. 10 zeigt eine achte Ausführungsform der vorschlagsgemäßen Abgabevorrichtung 1. Fig. 11 zeigt eine perspektivische Ansicht dieser Abgabevorrichtung 1.

Die achte Ausführungsform ist der fünften und sechsten Ausführungsform hinsichtlich der Schwenkbarkeit des Bauteils 5 sehr ähnlich. Das Bauteil 5 mit dem Auslaßventil 8 ist um eine in den Fig. 10 und 11 nicht gezeigte Schwenkachse 29 im Bereich des Auslasses bzw. Abgabeendes 27 aus der gezeigten, nicht betätigten Lage nach unten zum Öffnen des zugeordneten, nicht gezeigten Abgabeventils 18 schwenkbar bzw. kippbar. Bei der erstmaligen Betätigung bricht hierbei die in Fig. 10 noch angedeutete, vorzugsweise vorgesehene Sollbruchstelle 34, die insbesondere als schmaler Steg ausgebildet ist und die bevorzugte einstückige Herstellung des Gehäuseteils 4 und Bauteils 5 erleichtert.

Bei der achten Ausführungsform ist der Abgabekanal 12 axial endseitig offen und/oder nicht abgeknickt. Er bildet an seinem axialen Ende die Auslaßöffnung 25, die unmittelbar von dem Ventilelement 24 abdeckbar bzw. verschließbar ist.

Die Auslaßöffnung 25 endet vorzugsweise in einer nutartigen bzw. konkaven Oberfläche der Wandung 14. Insbesondere öffnet sich die Auslaßöffnung 25 im Bereich des dem Abgabeende 27 entgegengesetzten Endes einer länglichen, von dem Bauteil 5 gebildeten Vertiefung, die insbesondere von einem vorzugsweise U-förmigen, demgegenüber erhöhten Rand 35 umgeben ist. Der Rand 35 verläuft mit seinen beiden vorzugsweise parallelen Schenkeln in Richtung der Ausgaberichtung, also zum Abgabeende 27 hin.

Das Ventilelement 24 ist zumindest im Bereich des Randes 35 mit dem Bauteil 5 fest und dicht verbunden, wie durch den Bereich 17 in Fig. 11 schematisch angedeutet. Dies kann durch entsprechendes Eingreifen in einen entsprechenden Schlitz, einer entsprechenden Nut 36, einer Vertiefung oder dgl. - insbesondere im Bereich des Randes 35 - erfolgen, wie in Fig. 10 angedeutet.

Das das Ventilelement 24 bildende zweite Material 16 ist direkt an oder auf bzw. gegen das Bauteil 5 gespritzt, besonders bevorzugt wieder durch "Bi-Injection", wie bereits erläutert.

Zur sicheren festen und dichten Verbindung des Ventilelements 24 mit dem Bauteil 5 bzw. dessen Wandung 14 bzw. dem ersten Material 15 erfolgt vor dem Anspritzen des Ventilelements 24 wiederum vorzugsweise eine Vorbehandlung in dem Bereich 17 (in Fig. 11 gepunktet angedeutet), in dem die feste Verbindung zwischen Ventilelement 24 und Bauteil 5 gewünscht wird. Besonders bevorzugt erfolgt dies im Bereich des Randes 35 und/oder in einem die Auslaßöffnung 25 zumindest im wesentlichen U-förmig umgebenden Bereich.

Wie bei der vierten, fünften und sechsten Ausführungsform liegt gemäß einem bevorzugten Aspekt das Ventilelement 24 vorzugsweise gleichmäßig bzw. vollflächig auf dem Bauteil 5 bzw. dessen Wandung 14 entlang eines "virtuellen" Ausgabekanals ausgehend von der Auslaßöffnung 25 zum Abgabeende 27 hin auf.

Erst bei der Flüssigkeitsabgabe wird das Ventilelement 24 entlang dieses virtuellen Auslaßkanals vom Bauteil 5 bzw. der Wandung 14 elastisch abgehoben (dies ist möglich, da sich das zweite Material 16 mit dem ersten Material 15 des Bauteils 5 ohne die genannte Vorbehandlung nicht fest verbindet und da zumindest in dem Bereich des gewünschten virtuellen Auslaßkanals eben keine Vorbehandlung erfolgt) und dadurch der Auslaßkanal freigegeben bzw. geöffnet.

Nach beendeter Flüssigkeitsabgabe schließt das Auslaßventil 8 bzw. Ventilelement 24 aufgrund der elastischen Rückstellkräfte vorzugsweise wieder selbsttätig.

Einzelne Merkmale und konstruktive Lösungen der Ausführungsformen können auch beliebig miteinander kombiniert und/oder bei sonstigen Abgabevorrichtungen eingesetzt werden.

### Bezugszeichenliste:

- 1: Abgabevorrichtung
- 2: Flüssigkeit
- 3: Behälter
- 4: Unterteil / Gehäuseteil
- 5: Bauteil
- 6: Pumpraum
- 7: Einlaßventil
- 8: Auslaßventil
- 9: Betätigungselement
- 10: Anschlußstutzen
- 11: Saugschlauch
- 12: Abgabekanal
- 13: Verbindungsteil
- 14: Wandung (Bauteil)
- 15: erstes Material
- 16: zweites Material
- 17: Bereich (Vorbehandlung, Verbindung)
- 18: Abgabeventil
- 19: Anschlußabschnitt
- 20: Stutzen
- 21: Abschnitt
- 22: Durchbrechung
- 23: Steigleitung
- 24: Bauteil / Ventilelement
- 25: Auslaßöffnung
- 26: Vorsprung
- 27: Abgabeende
- 28: Anschlag
- 29: Schwenkachse
- 30: Betätigungsabschnitt
- 31: Betätigungsbereich
- 32: Ringwulst
- 33: Halteteil
- 34: Sollbruchstelle
- 35: Rand
- 36: Nut

## Patentansprüche

1. Abgabevorrichtung (1) für eine vorzugsweise kosmetische Flüssigkeit (2),
wobei die Abgabevorrichtung (1) einen Abgabekopf für die Flüssigkeit (2) bzw. ein davon gebildetes Produkt aus einem unter Druck stehenden oder setzbaren Behälter (3) aufweist oder bildet,
wobei die Abgabevorrichtung (1) ein erstes Bauteil (5) aus einem ersten oder zweiten Material (15, 16), ein zweites Bauteil (24) aus dem anderen Material und ein Gehäuseteil (4) aufweist,
wobei das erste Material (15) gegen das zweite Material (16) gespritzt und dadurch mit diesem verbunden ist, und
wobei das erste Bauteil (5) in das Gehäuseteil (4) eingesteckt oder eingerastet ist,
**dadurch gekennzeichnet,**
**dass** das erste Bauteil (5) einen Abgabekanal (12) bildet und an ein Abgabeventil (18) des Behälters (3) anschließbar ist, wobei das erste Bauteil (5) mit einem Anschlussabschnitt (19) zur Verbindung mit dem Abgabeventil (18) versehen ist, und dass das Gehäuseteil (4) das erste Bauteil (5) verschwenkbar hält oder das erste Bauteil (5) niederdrückbar ist, um das Abgabeventil (18) Ober das bewegbare Bauteil (5) zu öffnen.

2. Abgabevorrichtung nach Anspruch 1, **dadurch gekennzeichnet, dass** die Abgabevorrichtung (1) ein vorzugsweise niederdrückbares Betätigungselement (9) zur Öffnung des Abgabeventils (18) über das erste Bauteil aufweist.

3. Abgabevorrichtung nach Anspruch 2, **dadurch gekennzeichnet, dass** am Betätigungselement (9) ein Anschlag (28) angebracht ist.

4. Abgabevorrichtung nach einem der voranstehenden Ansprüche, **dadurch gekennzeichnet, dass** die beiden Bauteile (5, 24) ein insbesondere selbsttätig schließendes Auslaßventil (8) bilden.

5. Abgabevorrichtung nach den Ansprüchen 3und 4, **dadurch gekennzeichnet, dass** durch den Anschlag (28) das Betätigungselement (9) bzw. ein Auslaßventil (8) in die geschlossene Stellung gedrückt bzw. vorgespannt ist.

6. Abgabevorrichtung nach einem der voranstehenden Ansprüche, **dadurch gekennzeichnet, dass** das erste Bauteil (5) eine Auslassöffnung (25) aufweist, die vom zweiten Bauteil (24) abgedeckt oder verschließbar ist.

7. Abgabevorrichtung nach Anspruch 6, **dadurch gekennzeichnet, dass** durch elastische Verformung des ersten und/oder zweiten Bauteils (5, 24) die Auslaßöffnung (25) zur Ausgabe der Flüssigkeit (2) oder eines davon gebildeten Produkts, wie eines Schaums, freigebbar ist.

8. Abgabevorrichtung nach einem der voranstehenden Ansprüche, **dadurch gekennzeichnet, dass** die Flüssigkeit (2) bzw. das davon gebildete Produkt zwischen den beiden flächig aufliegenden Bauteilen (5, 24) durch entsprechende elastische Verformung mindestens eines Bauteils (24) - insbesondere quer zu einer Auslaßöffnung (25) - ausgebbar ist

9. Abgabevorrichtung nach einem der voranstehenden Ansprüche, **dadurch gekennzeichnet, dass** die beiden Bauteile (5, 24) vorzugsweise ausschließlich in einem ringförmigen oder U-förmigen Bereich (17) miteinander fest verbunden sind.

10. Abgabevorrichtung nach einem der voranstehenden Ansprüche, **dadurch gekennzeichnet, dass** das zweite Bauteil (24) als ein insbesondere elastisch verformbares Ventilelement ausgebildet ist

11. Abgabevorrichtung nach einem der voranstehenden Ansprüche, **dadurch gekennzeichnet, dass** das Gehäuseteil (4) mit dem Behälter (3) verbindbar, besonders bevorzugt klemmend und/oder rastend darauf aufsetzbar ist.

12. Abgabevorrichtung nach einem der voranstehenden Ansprüche, **dadurch gekennzeichnet, dass** die Abgabevorrichtung (1) mit dem Behälter (3) versehen ist und an das Abgabeventil (8) angeschlossen ist.

## Claims

1. Dispensing device (1) for a preferably cosmetic fluid (2),
wherein the dispensing device (1) comprises or forms a dispensing head for dispensing the fluid (2) and/or a product formed therefrom from a pressurized or pressurizable container (3), and
wherein the dispensing device (1) comprises a first component (5) composed of a first or second material (15, 16), a second component (24) composed of the other material (15, 16) and a housing part (4),
wherein the first material (15) is injected against the second material (16) and as a result is connected to the latter, and
wherein the first component (5) is inserted or clicked into the housing part (4),
**characterized in**
**that** the first component (5) forms a dispensing duct (12) and is connectable to a dispensing valve (18) of the container (3), wherein the first component (5) comprises a connection part (19) for connection to the dispensing valve (18), and
**that** the housing part (4) holds the first component (5) in a pivotable manner or the first component (5) is depressible in order to open the dispensing valve (18) by means of the moveable component (5).

2. Dispensing device according to claim 1, **characterized in that** the dispensing device (1) comprises a preferably depressible actuation element (9) for opening the dispensing valve (18) by means of the first component (5).

3. Dispensing device according to claim 2, **characterized in that** a stop (28) is attached to the actuation element (9).

4. Dispensing device according to one of the preceding claims, **characterized in that** both components (5, 24) form an outlet valve (8), which particularly closes automatically.

5. Dispensing device according to claims 3 and 4, **characterized in that** the actuation element (9) and/or an outlet valve (8) is pressed and/or prestressed into the closed position by the stop (28).

6. Dispensing device according to one of the preceding claims, **characterized in that** the first component (5) comprises an outlet orifice (25), which is covered or closable by the second component (24).

7. Dispensing device according to claim 6, **characterized in that** the outlet orifice (25) for dispensing the fluid (2) or a product formed therefrom, such as a foam, is releasable by elastic deformation of the first and/or the second component (5, 24).

8. Dispending device according to one of the preceding claims, **characterized in that** the fluid (2) and/or the product formed therefrom is dispensable between the two components (5, 24) resting flat against one another by means of appropriate elastic deformation of at least one of these components (5, 24) - in particular transversally to the outlet orifice (25).

9. Dispensing device according to one of the preceding claims, **characterized in that** the two components (5, 24) are connected together, preferably exclusively in a ringshaped or U-shaped area (17).

10. Dispensing device according to one of the preceding claims, **characterized in that** the second component (24) is designed as a particularly elastically deformable valve element.

11. Dispensing device according to one of the preceding claims, **characterized in that** the housing part (4) is connectable to the container (3), in particular attachable on the latter in a clamping and/or latching manner.

12. Dispensing device according to one of the preceding claims, **characterized in that** the dispensing device (1) comprises the container (3) and is connected to the dispensing valve (18).

## Revendications

1. Dispositif de dépôt (1) pour un liquide (2) de préférence cosmétique,
le dispositif de dépôt (1) présentant ou formant une tête de dépôt pour le liquide (2) ou un produit formé par celui-ci à partir d'un récipient (3) sous pression ou pouvant être mis sous pression,
le dispositif de dépôt (1) présentant un premier composant (5) réalisé dans un premier ou un deuxième matériau (15, 16), un deuxième composant (24) réalisé dans l'autre matériau et une partie de logement (4),
le premier matériau (15) étant pulvérisé contre le deuxième matériau (16) et relié de cette manière à celui-ci, et
le premier composant (5) étant inséré ou encliqueté dans la partie de logement (4),
**caractérisé**
**en ce que** le premier composant (5) forme un canal de dépôt (12) et peut être raccordé à une valve de dépôt (18) du récipient (3), le premier composant (5) étant doté d'une section de raccordement (19) destinée à l'assemblage avec la valve de dépôt (18), et
**en ce que** la partie de logement (4) maintient le premier composant (5) de façon basculante ou le premier composant (5) peut être soumis à une pression vers le bas pour ouvrir la valve de dépôt (18) par le biais du composant mobile (5).

2. Dispositif de dépôt selon la revendication 1, **caractérisé en ce que** le dispositif de dépôt (1) présente un élément d'actionnement (9) qui peut de préférence être soumis à une pression vers le bas pour ouvrir la valve de dépôt (18) par le biais du premier composant.

3. Dispositif de dépôt selon la revendication 2, **caractérisé en ce qu'**une butée (28) est réalisée sur l'élément d'actionnement (9).

4. Dispositif de dépôt selon l'une des revendications précédentes, **caractérisé en ce que** les deux composants (5, 24) forment une valve de sortie (8) qui, en particulier, de ferme de façon autonome.

5. Dispositif de dépôt selon les revendications 3 et 4, **caractérisé en ce que** l'élément d'actionnement (9) ou une valve de sortie (8) est comprimé(e) ou précontraint(e) dans la position fermée au moyen de la butée (28).

6. Dispositif de dépôt selon l'une des revendications précédentes, **caractérisé en ce que** le premier composant (5) présente une ouverture de sortie (25) qui est recouverte ou peut être obturée par le deuxième composant (24).

7. Dispositif de dépôt selon la revendication 6, **caractérisé en ce que** l'ouverture de sortie (25) peut être libérée au moyen d'une déformation élastique du premier et/ou du deuxième composant(s) (5, 24) pour la délivrance du liquide (2) ou d'un produit formé par celui-ci, comme une mousse.

8. Dispositif de dépôt selon l'une des revendications précédentes, **caractérisé en ce que** le liquide (2) ou le produit formé par celui-ci peut être délivré entre les deux composants (5, 24) reposant à plat au moyen d'une déformation élastique correspondante d'au moins un composant (24), en particulier transversalement par rapport à une ouverture de sortie (25).

9. Dispositif de dépôt selon l'une des revendications précédentes, **caractérisé en ce que** les deux composants (5, 24) sont de préférence reliés de façon fixe l'un avec l'autre uniquement dans une zone en forme de cercle ou en forme de U (17).

10. Dispositif de dépôt selon l'une des revendications précédentes, **caractérisé en ce que** le deuxième composant (24) est réalisé comme un élément de valve, en particulier déformable élastiquement.

11. Dispositif de dépôt selon l'une des revendications précédentes, **caractérisé en ce que** la partie de logement (4) peut être assemblée avec le récipient (3), et de façon particulièrement préférée, montée sur celui-ci par serrage et/ou par encliquetage.

12. Dispositif de dépôt selon l'une des revendications précédentes, **caractérisé en ce que** le dispositif de dépôt (1) est doté du récipient (3) et raccordé à la valve de dépôt (8).
